# EUROPEAN PATENT SPECIFICATION

(11) **EP 2 364 254 B1**
(45) Date of publication and mention of the grant of the patent: **20.09.2017**
(21) Application number: 09822895.0
(22) Date of filing: 28.10.2009
(51) Int. Cl.: B32B 37/00, B32B 27/00, B44C 5/04

(54) **METHOD FOR MANUFACTURING A DECORATIVE LAMINATE**
VERFAHREN ZUR HERSTELLUNG EINES ZIERLAMINATS
PROCÉDÉ POUR LA FABRICATION D'UN STRATIFIÉ DÉCORATIF

(30) Priority: 28.10.2008 AU 2008905572 P
(43) Date of publication of application: 14.09.2011
(73) Proprietor: Surface Technologies GmbH & Co. KG, 15837 Baruth (DE)
(72) Inventor: PRICE, David, Elwyn, Williamstown Victoria 3016 (AU)
(74) Representative: Michalski Hüttermann & Partner Patentanwälte mbB
(86) International application number: PCT/AU2009/001410
(87) International publication number: WO 2010/048668

(56) References cited:
- EP-B1- 1 595 718
- DE-A1-102006 002 417
- US-A- 3 539 424
- US-A- 5 116 446
- US-A- 5 338 584
- US-A1- 2002 000 290
- US-A1- 2008 199 666
- US-B2- 6 660 370

## Description

### Field of the invention

The invention relates to a method for manufacturing a decorative laminate, as well as decorative laminate products manufactured by the method according to the invention.

### Background of the invention

For the manufacture of decorative laminates, substrates, for example particleboard or fibreboard or impregnated kraft core papers, are laminated with one or more resin impregnated overlaying papers on one or both sides, in which these paper materials serve as a carrier for the resinous starting material, pigments, additives, print or any subset of those. These carrier materials also impart an internal stability to the final cured resin through their interacting fibrous structure.

Various innovations have been proposed to improve the state of the art with particular emphasis on energy and raw material cost reduction. European patent EP 1595718 (by the current inventor) describes a process wherein a polymer is applied to the substrate surface in a first process step and subsequently a partial curing of the polymer takes place in a second process step, followed by placement of an overlaying paper or non-woven material onto the partially cured polymer layer and finally curing the polymer and the overlaying material under heat and pressure.

Reference to any prior art in the specification is not, and should not be taken as, an acknowledgment or any form of suggestion that this prior art forms part of the common general knowledge in Australia or any other jurisdiction or that this prior art could reasonably be expected to be ascertained, understood and regarded as relevant by a person skilled in the art.

It is an object of the invention to provide a method for manufacturing laminates in which the usage of energy and raw materials can be reduced while still achieving laminate properties that meet the needs of the consumer.

### Summary of the Invention

In a first aspect the invention accordingly provides a method according to claim 1 for manufacturing a laminate, comprising:
applying a first coating to a surface of a substrate;
placing an overlaying material onto the first coating;
applying a second coating to the overlaying material; and
partially curing or drying at least part of the first coating after placement of the overlaying material, and partially curing at least part of the second coating after application of the second coating to the combination of the first coating and the overlaying material.

In a second aspect the invention provides a method for manufacturing a laminate, comprising:
applying a first coating to a surface of a substrate,
placing an overlaying material onto the first coating;
applying a second coating to the overlaying material; and
effecting initial partial curing after the second coating has been applied to the combination of the first coating and the overlaying material.

In a third aspect the invention provides a method for manufacturing a laminate, comprising:
applying a first coating to a surface of a substrate;
placing an overlaying material onto the first coating;
thereafter partially curing at least part of the first coating; and
pressing the substrate, the first coating and the overlaying material as an assembly in a hot press to form a laminate.

In a fourth aspect the invention provides a method of manufacturing a laminate, comprising:
applying a first coating to a surface of a substrate;
placing a partially cured resin-impregnated overlaying material onto the first coating; and
applying curing energy to the substrate surface, first coating, and overlaying material to partially cure or dry the first coating;
wherein the curing energy is selected to avoid over-curing of the partially cured resin-impregnated material.

The methods according to the invention may applied to one or both sides of the substrate.

The starting materials used as coatings may be monomers, oligomers or polymers and applied in any appropriate form, for example but not limited to their solid, liquid or gaseous forms.

The overlaying materials may be any appropriate material, for example but not limited to cellulose, plastic or glass fibres.

The laminate produced by the methods of the invention may be a decorative laminate. Accordingly, the starting materials or overlaying materials may contain additives to provide technical or decorative properties, for example but not limited to pigments, dyes, optical brighteners, UV absorbers, metallic particles, pearlescent effect, laser activated particles, antistatic, antimicrobial, wetting agents, release agents, catalysts, anti-scratch, anti-abrasion, dispersants, thickeners, gloss or matte effect additives.

The additives may also be applied separately without direct incorporation in a starting material.

In a preferred embodiment, the substrate surface is pre-treated, before the first coating is applied, to seal the surface of the substrate against excessive and undesirable ingress of the first coating into the substrate. The overlaying material is then applied to the first coating and subsequently the second coating is applied to the surface of the overlaying material. The sealing coating of the substrate may be a polymer that is partially cured.

In preferred embodiments a lacquer is applied to the surface of the laminate after hot pressing. The lacquer may be applied in one or several coating steps.

The overlaying material may be pre-treated to provide a surface that is receptive to a lacquer after hot pressing. The pre-treatment of the overlaying material may be for example, by deposition of a triazine vapour. Alternatively the laminate surface after the hot pressing is treated with an adhesion promoter before the lacquer is applied to provide the required adhesion of the lacquer to the laminate surface.

The curing of the lacquered surface then takes place using a curing medium chosen relative to the type of lacquer, for example by heat, radiation or electron bombardment.

The overlaying material may be printed before application to the substrate and the uncured coating, or may be printed after application of the overlaying material and partial curing of the second coating. The printing application may be by any known means, but inkjet printing is preferred. The second coating may be in fact an inkjet receptive layer. A protective coating which may also be an adhesion promoter may be applied after any printing step.

The overlaying material may be a clear overlay paper or may be a pigmented paper.

By using the methods according to the invention, an overlaying paper or non-woven material or other overlapping materials is applied to the substrate already coated with an uncured coating. In the first aspect of the invention partial curing of the combination of uncured coating and overlaying material takes place before a second coating is applied. The second coating is then partially cured and the substrate containing a first coating, an overlaying material and a second coating is finally cured in a hot press.

In the second aspect of the invention, the partial curing first takes place after a second coating has been applied to the combination of the first uncured coating and the overlaying material.

In a particularly preferred embodiment of the invention, several layers of a coating are applied to the substrate with a partial curing occurring to each layer except the final layer where the overlaying material is applied before any partial curing takes place of the final coating. The coating thereafter applied to the overlaying material may also be applied as several layers with partial curing of each individual layer.

According to the invention, the combination of substrate, coatings and overlaying material is advantageously further cured using a hot press. The hot press utilizes a smooth or textured release paper, or pressplate or pressbelt to impart a smooth or textured surface to the laminate.

It will be seen that, in certain embodiments, a coating is applied to the overlaying material after partial curing or drying of the first coating and before treatment with the hot press. In other embodiments a coating is applied to the overlaying material after partial curing or drying of the first coating and after treatment with the hot press. In still other respective embodiments, a coating is applied to the overlaying material before any partial curing takes place. Alternatively, a coating may be applied to the overlaying material before partial curing or drying of the first coating and again after treatment with the hot press. Preferably a lacquer may be applied to the laminate surface after pressing in a hot press.

Advantageously, the invention minimizes the use of energy intensive processing of impregnated overlaying papers or impregnated non-woven materials.

As used herein, except where the context requires otherwise the term "comprise" and variations of the term, such as "comprising", "comprises" and "comprised", are not intended to exclude other additives, components, integers or steps.

### Brief description of the drawings

The invention will now be described, by way of example only, with reference to the accompanying drawings, in which:
Figure 1 is a schematic diagram showing the process steps in a prior art method of manufacturing a laminate;
Figure 2 is a schematic diagram showing the process steps in a further prior art method of manufacturing a laminate as described in EP1595718;
Figure 3 is a schematic diagram of the process steps according to a first embodiment of the invention; and
Figure 4 is a schematic diagram of the process steps according to a second embodiment of the invention.

### Description of preferred embodiments

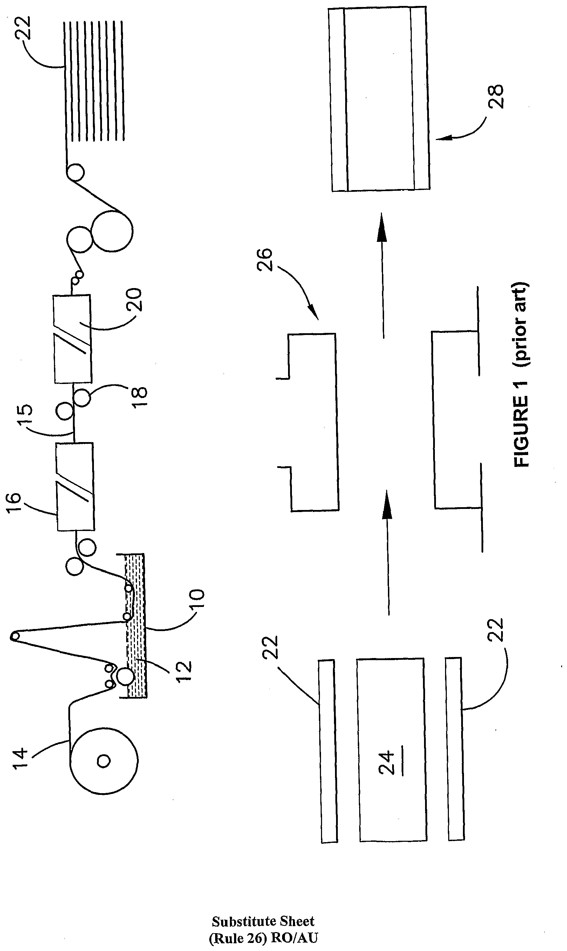

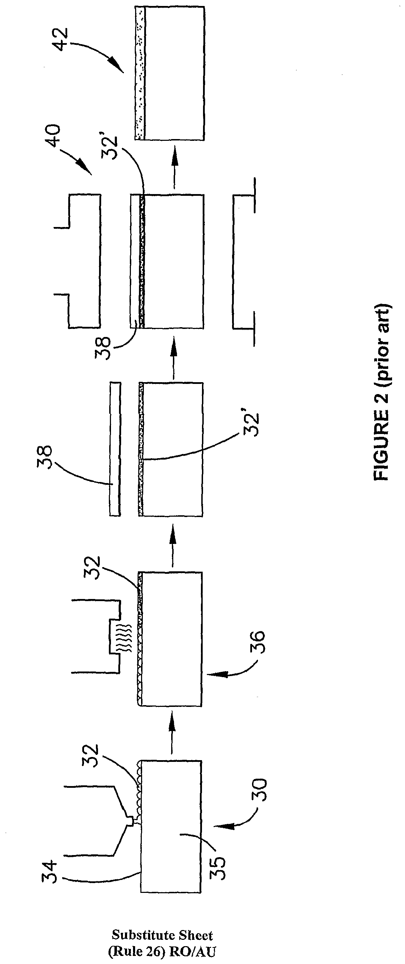

In order to convey the difference between the manufacturing process of a laminate according to the prior art and the manufacturing process of a laminate according to the invention, diagrams showing the process steps in prior art methods of manufacturing a laminate are shown in Figures 1 and 2.

Referring briefly to Figure 1, in a first process step 10 resin 12 is applied to a paper material 14 before being fed to a first dryer 16. A first coating 18 is then applied to the resin impregnated paper 15, the combination then passing to a second dryer 20. After cooling, the sheets of impregnated paper 22 are applied to both sides of a substrate 24 and finally cured in a hot press 26 to form a laminate 28.

The process illustrated in Figure 2 is that described in EP1595718. In a first process step 30 a polymer 32 is applied a surface 34 of a substrate 35 followed by partial curing of the polymer 32 in a second process step 36. An overlaying paper or non-woven material 38 is subsequently placed onto the partially cured polymer layer 32' before the polymer and the overlaying material are finally cured under heat and pressure in hot press 40 to form a laminate 42.

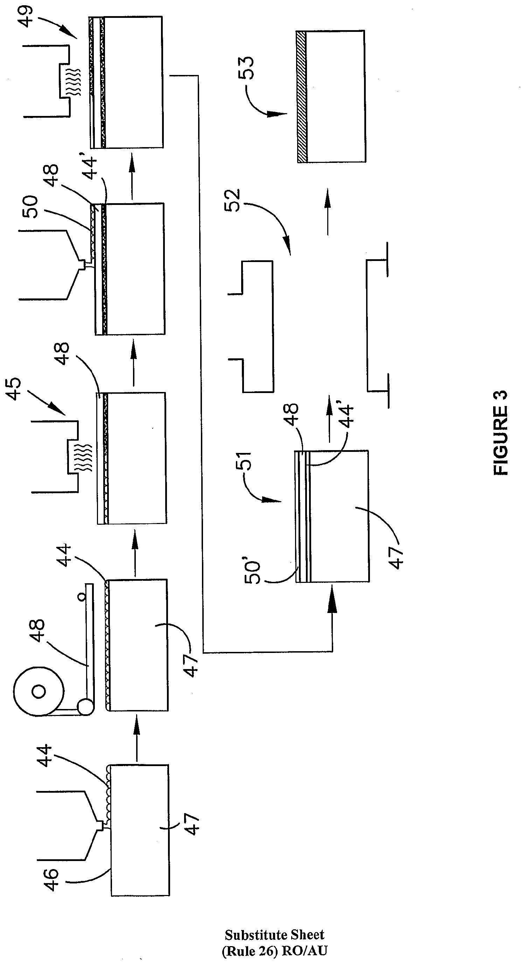

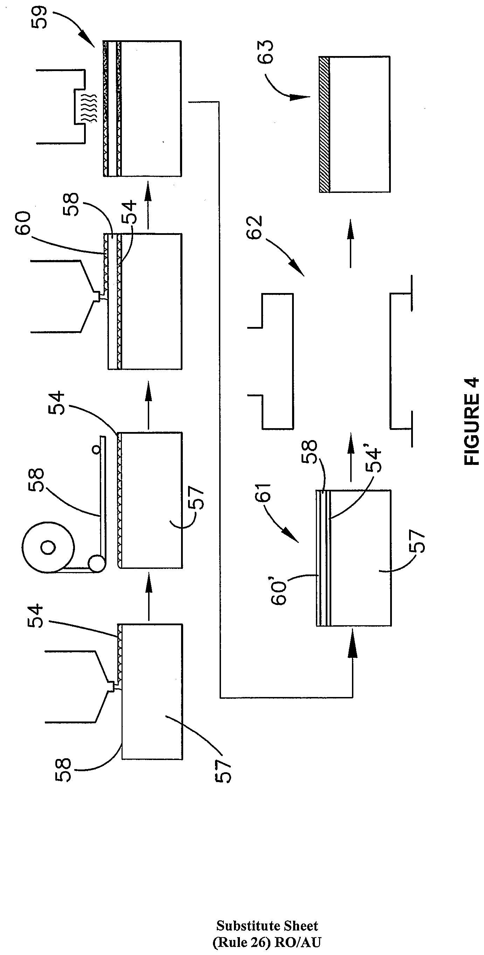

Figures 3 and 4 are schematic diagrams of the process steps according to two embodiments of the invention.

A first embodiment of the invention is shown in Figure 3. The method of manufacturing a laminate in this embodiment comprises applying a first coating 44 to a surface 46 of a substrate 47. An overlaying material 48 is then placed onto the first coating 44. The first coating 44 is then partially cured 45 prior to a second coating 50 being applied to the overlaying material 48. Partial curing 49 of the second coating 50 takes place after application of the second coating 50 to the combination of the partially cured first coating 44' and the overlaying material 48. The resultant assembly 51 of partially cured coatings 44',50', overlaying material 48 and substrate 47 is then finally cured in a hot press 52 to form a laminate 53.

A second embodiment of the invention is shown in Figure 4. The method of manufacturing a laminate in this embodiment comprises applying a first coating 54 to a surface 56 of a substrate 57. An overlaying material 58 is then placed onto the first coating 54 and a second coating 60 is applied to the overlaying material 54. Initial partial curing 59 of both first coating 54 and second coating 60 takes place after the second coating 60 has been applied to the combination of the first coating 54 and the overlaying material 58. The resultant assembly 61 of partially cured coatings 54',60', overlaying material 58, and substrate 57 is then finally cured in a hot press 62 to form a laminate 63.

Applicable coatings for the methods of the invention may be freely selected in accordance to the desired end properties of the final laminate and the method of curing. As a non-limiting first example, the first coating is a urea formaldehyde (UF) resin and the coating applied to the overlaying material is a melamine formaldehyde (MF) resin.

A further non-limiting example is a first coating using a dual cure coating resin. A dual cure coating resin may be in a first curing step cured by UV light, and in a second step cured by another curing method such as alternative radiation or heat or in a hot press. The dual cure first coating should be compatible with the second coating to avoid delamination.

Another non-limiting example is to use a urea formaldehyde resin as the first coating and using a dual cure coating as the second coating. To improve adhesion of the dual cure coating to the combination of the first coating and the overlaying material an adhesion promoter may be applied before the second coating is applied. The adhesion promoter may be applied to the overlaying material before the overlaying material is applied to the uncured first coating.

In another non-limiting example the first coating is a urea formaldehyde resin and the overlaying material is a decor paper coated with a layer of melamine powder. The second coating applied after the hot press is an acrylic lacquer.

The coating may be modified to provide selected laminate properties, for example with plasticers to provide crack resistance or postformability. The range of additives possible to modify a starting coating is numerous, and may be freely selected to obtain the desired property in the finished laminate. The following are further non-limiting examples of additives used to modify a coating - pigments, dyes, optical brighteners, UV absorbers, metallic particles, pearlescent effect, laser activated particles, antistatic, antimicrobial, wetting agents, release agents, catalysts, anti-scratch, anti-abrasion, gloss or matte effect additives.

The coatings should be compatible to avoid delamination in the final laminate structure. The coatings should also penetrate the overlaying material to avoid delamination in the final laminate structure. Penetration of the first coating into the overlaying material before partial curing of the first coating assists in the prevention of subsequent delamination. The partial curing of the combination of the first coating, overlaying material and second coating before the final assembly is placed in the hot press assists in the prevention of subsequent delamination.

The method of application of the coatings can be freely chosen. Non-limiting examples are roller coating, spraying, brushing, curtain coating, vacuum deposition.

The overlaying material may have a grammage per square metre (gsm) of between 5gsm and 200gsm, preferably between 10gsm and 120gsm, more preferably between 15gsm and 80gsm, most preferably between 20 and 45gsm.

Partial curing of the coating after application of the overlaying material may be by heat, by radiation, by electron bombardment or by pressure. The method for introducing energy into the coating at the start of polymerization can be freely selected and adapted to the preferred coating material, and can be a combination of energy sources. Ideally the introduction of energy to the coating takes place as soon as possible after the application of the coating to the substrate and the application of the overlaying material to the first coating.

In a particular embodiment the energy is provided by near infrared (NIR) emitters. By NIR is meant light of wavelength between 0.8µm and 2.5 µm. NIR will usually be from an emitter source operating above 1400°C. The use of NIR enables drying without significant curing of the resin.

In another embodiment a combination of NIR emitters and UV emitters are utilized.

In this document the term overlaying material has been used as a synonym for overlaying paper, non-woven materials and overlapping material such as loose fibres of cellulose, plastic or glass.

The term coating has been used as a synonym for monomers, oligomers and polymers.

### Example

In an example of the process according to the invention, TiO₂, CMC and a dispersant were added to an uncured UF resin and stirred to obtain a homogenous opaque uncured UF resin. As this was intended as a coating and not as an impregnating resin the solids content may be considerably higher than that used in paper impregnation. A higher solids content means that less energy is required to remove the excess solvent in the resin.

The opaque uncured UF resin was applied to the surface of a particleboard. Preferably the surface of the particleboard had previously been effectively sealed to prevent excessive ingress of the first uncured coating into the particleboard surface layer. This sealing, which should not cause delamination at a later stage, was for example achieved by curing, to a dry-to-touch b-stage using NIR emitters, a thin layer of a coating that was compatible with the first coating material. The use of NIR emitters over a short distance enables rapid removal of the solvent without the large increase in temperature that would cure the coating and cause wetting problems with the next coating.

After application of the opaque uncured UF resin to the surface of the particleboard an overlaying paper was applied to the as yet uncured opaque UF resin coating. Preferably the overlaying paper is lightly pressed into the uncured opaque UF resin using a Teflon coated roll. The previously sealed particleboard surface prevents excessive ingress of the uncured opaque UF resin into the surface layer of the particleboard, while the overlaying paper through light pressure and capillary action starts to absorb the as yet uncured opaque UF resin.

Subsequently, a set of NIR emitters applied electromagnetic radiation to the particleboard surface and partially cured the opaque UF resin. The particleboard with the partially cured opaque UF resin and overlaying paper was subsequently coated with MF resin. The MF resin coating is preferably partially cured using NIR emitters. Due to the fact that the MF resin is a coating and not an impregnating resin, the solids content may be considerably higher than that used for paper impregnation. A higher solids content means that less energy is required to remove the excess solvent in the resin.

Finally, the coating procedure was applied to the reverse side of the particleboard. The resultant assembly comprising the particleboard with the lay-up of pigmented UF resin, overlaying paper and MF resin already partially cured was placed in a hot press and under heat and pressure the final laminate was formed, complete with a smooth or textured surface.

An advantageous and economically beneficial aspect of one or more embodiments of the invention is that the coatings are not used to directly impregnate the overlaying material and as such may be of higher viscosity and lower solvent content than usually required for impregnation resins, thereby requiring less energy to advance the coatings to a b-stage and lower solvent content suitable for the final pressing operation.

A further advantage obtained by the method according to one or more embodiments of the invention is that a printed overlaying material will have minimal expansion when used in its dry form thus enabling improved dimensional stability of the printed design, of particular importance with regard to having the design pressed in register with a textured press tool.

It will further be appreciated that use of the process according to one or more embodiments of the invention enables a lesser amount of raw material to be used in comparison with state-of-the-art impregnated papers. Compared with impregnated papers that fill the core of the paper with UF resin and subsequently coat MF resin onto both sides of the paper, the process according to embodiments of the invention may be completed with only one layer of MF resin. The preferred higher solids content in the coatings enables a saving of energy in comparison with state-of-the-art impregnated papers. The use of high intensity NIR emitters in the partial curing of the coatings enables high line speeds to be achieved. The fact that the particleboard is ready to enter the hot press without using impregnated paper lay-up stations enables a higher productivity to be gained at the hot press.

## Claims

1. A method of manufacturing a laminate, comprising:
applying a first coating to the surface of the substrate;
placing an overlaying material onto the first coating, the first coating being uncured;
thereafter partially curing at least a part of the first coating, wherein the first coating is applied as a single coating or as several layers with intermediate partial curing or drying between application of each layer but for the last layer which remains undried and uncured, **characterized in that** partial drying or curing of the first single coating or the last coating of several layers takes place after the placement of an overlaying material, and
after the partially curing of the at least part of the first coating, the substrate, the first coating and the overlaying material are pressed as an assembly in a hot press to form a laminate.

2. The method according to claim 1 further including applying a second coating to the overlaying material after said partial drying or curing of the first single coating or the last coating of several layers, wherein partial curing or drying of the second layer takes place before the assembly of the substrate, overlaying material and coatings is further cured in a hot press.

3. The method according to claim 1 further including applying a second coating to the overlaying material, wherein said partial drying or curing of the first single coating or the last coating of several layers is in conjunction with partial drying or curing of the second layer after the second coating has been applied to the overlaying material.

4. The method according to claim 1, 2 or 3 wherein said overlaying material is a resin impregnated partially cured overlaying material, said partial drying or curing of the first single coating or the last coating of several layers is after placement of the resin impregnated partially cured overlaying material and is by applying energy to the first coating to partially cure or dry the first coating or the last coating of several layers of the first coating, wherein the energy source for curing the first coating is selected to avoid over-curing of the resin impregnated partially cured overlaying material.

5. The method according to any one of claims 1 to 4 wherein the overlaying material has been printed prior to attachment to the first coating.

6. The method according to any one of claims 1 to 4 wherein the overlaying material is printed after application of the overlaying material and partial curing of the second coating.

7. The method according to claim 6 wherein the second coating is an ink jet receptive layer and the printing is by inkjet printing.

8. The method according to claim 6 or 7 wherein a protective coating is applied after the printing step.

9. The method according to any one of claims 3 to 8 wherein coatings applied to the overlaying material are applied as several layers with partial curing of each individual layer.

10. The method according to any one of claims 1 to 9 wherein additives to provide technical or decorative properties to the laminate are contained in the coating material or overlaying materials, or are applied separately.

11. The method according to any one of claims 1 to 4 wherein the substrate surface is pre-treated to seal the surface against excessive and undesirable ingress of the first coating into the substrate.

12. The method according to any one of claims 1 to 11 wherein the partial drying or partial curing energy is chosen from heat, radiation, electron bombardment or pressure, or a combination of energy sources and if by NIR using emitters operating above 1400°C and/or wherein further curing in a hot press includes the use of smooth or textured release paper, or pressplate, or pressbelt to impart a smooth or textured surface to the laminate,

13. The method according to any one of claims 1 to 12 wherein after the hot press step the laminate is lacquered in one or more steps on one side or on both sides of the laminate.

## Patentansprüche

1. Verfahren zum Herstellen eines Laminats, mit den Schritten:
Aufbringen einer ersten Beschichtung auf eine Oberfläche eines Substrats;
Anordnen eines Deckschichtmaterials auf der ersten Beschichtung;
anschließendes partielles Aushärten mindestens eines Teils der ersten Beschichtung,
wobei die erste Beschichtung als eine einzelne Beschichtung oder als mehrere Lagen aufgebracht wird, wobei zwischen dem Aufbringen jeder der Lagen mit Ausnahme der letzten Lage, die ungetrocknet und unausgehärtet bleibt, ein partieller Zwischenaushärtungs- oder -trocknungsprozess ausgeführt wird;
**dadurch gekennzeichnet, dass**
das partielle Trocknen oder Aushärten der ersten einzelnen Beschichtung oder der letzten Beschichtung von mehreren Lagen stattfindet, nachdem ein Deckschichtmaterial aufgebracht worden ist; und
nach dem partiellen Aushärten des mindestens einen Teils der ersten Beschichtung das Substrat, die erste Beschichtung und das Deckschichtmaterial als eine Einheit in einer Heißpresse gepresst werden, um das Laminat herzustellen.

2. Verfahren nach Anspruch 1, ferner mit dem Aufbringen einer zweiten Beschichtung auf das Deckschichtmaterial nach dem partiellen Trocknen oder Aushärten der ersten einzelnen Beschichtung oder der letzten Beschichtung der mehreren Lagen, wobei ein partielles Aushärten oder Trocknen der zweiten Beschichtung stattfindet bevor die Einheit aus dem Substrat, dem Deckschichtmaterial und den Beschichtungen in einer Heißpresse weiter ausgehärtet wird.

3. Verfahren nach Anspruch 1, ferner mit dem Aufbringen einer zweiten Beschichtung auf das Deckschichtmaterial, wobei das partielle Trocknen oder Aushärten der ersten einzelnen Beschichtung oder der letzten Beschichtung der mehreren Lagen in Verbindung mit einem partiellen Trocknen oder Aushärten der zweiten Beschichtung erfolgt, nachdem die zweite Beschichtung auf das Deckschichtmaterial aufgebracht worden ist.

4. Verfahren nach Anspruch 1, 2 oder 3, wobei das Deckschichtmaterial ein harzimprägniertes, partiell ausgehärtetes Deckschichtmaterial ist, wobei das partielle Trocknen oder Aushärten der ersten einzelnen Beschichtung oder der letzten Beschichtung von mehreren Lagen ausgeführt wird, nachdem das harzimprägnierte, partiell ausgehärtete Deckschichtmaterial angeordnet worden ist, und durch Zuführen von Energie zur ersten Beschichtung erfolgt, um die erste Beschichtung oder die letzte Beschichtung von mehreren Lagen der ersten Beschichtung partiell auszuhärten oder zu trocknen, wobei die Energiequelle zum Aushärten der ersten Beschichtung derart ausgewählt wird, dass ein übermäßiges Aushärten des harzimprägnierten, partiell ausgehärteten Deckschichtmaterials vermieden wird.

5. Verfahren nach einem der Ansprüche 1 bis 4, wobei das Deckschichtmaterial vor dem Befestigen an der ersten Beschichtung bedruckt wird.

6. Verfahren nach einem der Ansprüche 1 bis 4, wobei das Deckschichtmaterial nach dem Aufbringen des Deckschichtmaterials und dem partiellen Aushärten der zweiten Beschichtung bedruckt wird.

7. Verfahren nach Anspruch 6, wobei die zweite Beschichtung eine Tintenaufnahmeschicht ist und der Druckvorgang ein Tintenstrahldruckvorgang ist.

8. Verfahren nach Anspruch 6 oder 7, wobei nach dem Druckschritt eine Schutzschicht aufgebracht wird.

9. Verfahren nach einem der Ansprüche 3 bis 8, wobei die auf das Deckschichtmaterial aufgebrachten Beschichtungen als mehrere Lagen aufgebracht werden, wobei jede einzelne der mehreren Lagen partiell ausgehärtet wird.

10. Verfahren nach einem der Ansprüche 1 bis 9, wobei im Beschichtungsmaterial oder in den Deckschichtmaterialen Zusatzstoffe zum Bereitstellen technischer oder dekorativer Eigenschaften für das Laminat enthalten sind oder separat aufgebracht werden.

11. Verfahren nach einem der Ansprüche 1 bis 4, wobei die Substratoberfläche vorbehandelt wird, um die Oberfläche gegen übermäßiges und unerwünschtes Eindringen der ersten Beschichtung in das Substrat abzudichten.

12. Verfahren nach einem der Ansprüche 1 bis 11, wobei die Energie für das partielle Trocknen oder Aushärten aus Wärme, Strahlung, Elektronenbeschuss oder Druck oder einer Kombination davon ausgewählt wird, und wobei bei der Verwendung von NIR-Strahlung Emitter verwendet werden, die oberhalb von 1400°C betrieben werden, und/oder wobei ferner das Aushärten in einer Heißpresse die Verwendung von glattem oder strukturiertem Trennschichtpapier oder einer glatten oder strukturierten Pressplatte oder eines glatten oder strukturierten Pressbandes zum Ausbilden einer glatten oder einer strukturierten Oberfläche auf dem Substrat aufweist.

13. Verfahren nach einem der Ansprüche 1 bis 12, wobei nach dem Heißpressschritt das Laminat in einem oder in mehreren Schritten auf einer Seite oder auf beiden Seiten das Laminats lackiert wird.

## Revendications

1. Procédé de fabrication d'un stratifié, comprenant :
l'application d'un premier revêtement à la surface du substrat ;
la mise en place d'une matériau de recouvrement sur le premier revêtement, le premier revêtement étant non durci ;
puis un durcissement partiel d'au moins une partie du premier revêtement, où le premier revêtement est appliqué sous la forme d'un revêtement unique ou sous la forme de plusieurs couches avec un durcissement ou un séchage partiel intermédiaire entre l'application de chaque couche, sauf pour la dernière couche qui reste non séchée et non durcie, **caractérisé en ce que** le séchage ou le durcissement partiel du premier revêtement unique ou du dernier revêtement des plusieurs couches se produit après la mise en place d'un matériau de recouvrement, et
après le durcissement partiel de l'au moins partie du premier revêtement, le substrat, le premier revêtement et le matériau de recouvrement sont pressés sous forme d'un ensemble dans une presse à chaud pour former un stratifié.

2. Procédé selon la revendication 1, comprenant en outre l'application d'un second revêtement contre le matériau de recouvrement après ledit séchage ou durcissement partiel du premier revêtement unique ou du dernier revêtement des plusieurs couches, où le durcissement ou le séchage partiel de la seconde couche se produit avant que l'ensemble du substrat, du matériau de recouvrement et des revêtements ne soit durci par la suite dans une presse à chaud.

3. Procédé selon la revendication 1, comprenant en outre l'application d'un second revêtement contre le matériau de recouvrement, dans lequel ledit séchage ou durcissement partiel du premier revêtement unique ou du dernier revêtement des plusieurs couches est associé avec le séchage ou le durcissement partiel de la seconde couche après que le second revêtement ait été appliqué contre le matériau de recouvrement.

4. Procédé selon les revendications 1, 2 ou 3, dans lequel ledit matériau de recouvrement est un matériau de recouvrement partiellement durci imprégné de résine, ledit séchage ou durcissement partiel du premier revêtement unique ou du dernier revêtement des plusieurs couches se fait après la mise en place du matériau de recouvrement partiellement durci imprégné de résine et se fait par l'application d'énergie au premier revêtement à durcir partiellement ou au premier revêtement à sécher ou au dernier revêtement des plusieurs couches du premier revêtement, où la source d'énergie pour durcir le premier revêtement est sélectionnée afin d'éviter un durcissement excessif du matériau de recouvrement partiellement durci imprégné de résine.

5. Procédé selon l'une quelconque des revendications 1 à 4, dans lequel le matériau de recouvrement a été imprimé préalablement à sa fixation contre le premier revêtement.

6. Procédé selon l'une quelconque des revendications 1 à 4, dans lequel le matériau de recouvrement est imprimé après l'application du matériau de recouvrement et le durcissement partiel du second revêtement.

7. Procédé selon la revendication 6, dans lequel le second revêtement est une couche sensible au jet d'encre et l'impression est une impression par jet d'encre.

8. Procédé selon la revendication 6 ou 7, dans lequel un revêtement protecteur est appliqué après l'étape d'impression.

9. Procédé selon l'une quelconque des revendications 3 à 8, dans lequel les revêtements appliqués contre le matériau de recouvrement sont appliqués sous forme de plusieurs couches avec un durcissement partiel de chaque couche individuelle.

10. Procédé selon l'une quelconque des revendications 1 à 9, dans lequel des additifs pour apporter les propriétés techniques ou décoratives au stratifié sont contenus dans le matériau de revêtement ou dans les matériaux de recouvrement, ou sont appliqués séparément.

11. Procédé selon l'une quelconque des revendications 1 à 4, dans lequel la surface du substrat est prétraitée pour rendre la surface étanche vis-à-vis d'une infiltration excessive et indésirable du premier revêtement dans le substrat.

12. Procédé selon l'une quelconque des revendications 1 à 11, dans lequel l'énergie du séchage ou du durcissement partiel est choisie parmi la chaleur, un rayonnement, une pression ou un bombardement par des électrons, ou une combinaison des sources d'énergie et, si c'est par le proche infrarouge (NIR), en utilisant des émetteurs fonctionnant au dessus de 1400 °C et/ou où en outre le durcissement dans une presse à chaud comprend l'utilisation d'un papier protecteur lisse ou texturé, ou une plaque à presser, ou une bande à presser pour conférer une surface lisse ou structurée au stratifié.

13. Procédé selon l'une quelconque des revendications 1 à 12, dans lequel, après l'étape de la presse à chaud, le stratifié est laqué en une ou en plusieurs étapes sur un seul côté ou sur les deux côtés du stratifié.
